# EUROPEAN PATENT SPECIFICATION

(11) **EP 0 669 246 B1**
(45) Date of publication and mention of the grant of the patent: **04.03.1998**
(21) Application number: 94119439.1
(22) Date of filing: 08.12.1994
(51) Int. Cl.: B62K 11/10

(54) **Foot board structure of scooter type vehicle**
Fussbrettstruktur eines motorrollerartiges Fahrzeug
Structure du plancher d'un véhicule du type scooter

(30) Priority: 28.02.1994 JP 29342/94
(43) Date of publication of application: 30.08.1995
(73) Proprietor: SUZUKI KABUSHIKI KAISHA, Hamamatsu-Shi, Shizuoka-Ken (JP)
(72) Inventor: Shinohara, Kazunori, Hamamatsu-shi, Shizuoka-ken (JP)
(74) Representative: Klunker . Schmitt-Nilson . Hirsch

(56) References cited:
- FR-A- 2 532 897
- FR-A- 2 575 990

## Description

### BACKGROUND OF THE INVENTION

The present invention relates to a foot board of a scooter type vehicle and, more particularly, to a foot board structure of a scooter in which a battery holder is formed integrally as defined in the preamble of claim 1.

In general, a scooter type vehicle is provided with a foot board, i.e., a portion on which driver's feet are placed to drive the vehicle in a state of seating. FR-A-2575990 discloses a scooter type vehicle of the above-mentioned type.

Conventionally, a battery holder or the like for accommodating a battery and other parts is formed with such a foot board to effectively utilize a vehicle space.

For example, an arrangement such as that disclosed in the Japanese Patent Laid-open Publication No. 136669/1980 is known in which a battery is accommodated in a box-like space formed under a generally central portion of a floor member (foot board), and other arrangements such as those disclosed in the Japanese Utility Model Publication No. 19105/1983 and the Japanese Patent Laid-open Publication No. 222883/1986 are known in which a box-like space is formed on a generally central portion of a floor member to define a battery case location space.

The Japanese Utility Model Publication No. 11826/1984 and the Japanese Patent Laid-open Publication No. 157876/1987 also disclose arrangements in which a slanted portion is formed on a front portion of a floor member, a box-like recess is formed forwardly and obliquely downward from the slanted portion to define a battery case location space, and the battery case is covered with a lid.

In the arrangement disclosed in the Japanese Patent Laid-open Publication No. 136669/1980, however, the space on the floor member is limited since the battery and other objects are positioned at the central portion of the floor member, and heavy objects including the battery cannot be concentrated in a direction along a front-rear axis of the vehicle because such heavy objects are positioned closer to a front side of the vehicle.

In the arrangements disclosed in the Japanese Utility Model Publication No. 19105/1983 and other documents, the effective area for feet placement on the floor member is reduced because the space for accommodating the battery extend upwardly from the central portion of the floor member.

In the arrangements disclosed in the Japanese Utility Model Publication No. 11826/1984 and other documents, a portion accommodating the battery can be seen from the outside, so that the external appearance may be impaired. Furthermore, the cost of the lid is high because there is a need for a design of the external appearance of the lid. There is also a possibility of rain water or the like being accumulated in the space for accommodating the battery.

### SUMMARY OF THE INVENTION

The present invention has been achieved in consideration of the above-described problems of the foot boards of the conventional scooter type vehicles, and an object of the present invention is to provide a foot board structure for a scooter type vehicle designed to improve the external appearance of the vehicle and to prevent accumulation of rain water or the like around the battery while maintaining the effective area for placement of driver's feet.

This and other objects can be achieved according to the present invention by providing a foot board structure of a scooter vehicle in which a cover leg shield is disposed above a front wheel, a foot board for a rider is attached to a lower portion of the cover leg shield, an upper frame cover is disposed below a rider's seat, and a lower frame cover covering a vehicle body side from a rear portion of the vehicle body to a portion near a front end of the foot board is disposed to a lower edge portion of the rear portion of the upper frame cover, wherein the foot board is provided with a rear end portion opening toward a rear side of the vehicle so as to provide a generally V-shaped configuration as viewed in a plan view and to extend to positions on the left and right sides of a vehicle frame under the seat, a battery holder in which a battery is accommodated is formed integrally with the foot board between the left and right extending portions thereof, and a frame cover for covering the vehicle frame and the battery holder is mounted to a generally V-shaped inner edge portion formed by the left and right extending portions of the foot board.

In preferred embodiments, a wall portion is formed along the V-shaped inner edge portion of the foot board and the frame cover having a lower end portion inserted inside the wall portion. Channels or grooves are formed between lateral side portions of the battery holder and the wall portion of the inner edge portion of the foot board so as to connect them and to open rearward of the vehicle body. The channels each provides an angled triangular shape in a plan view and has a bottom surface inclining towards the rear side of the vehicle body.

The battery holder is provided with a bottom portion which is fastened to the vehicle frame by means of screw.

A drain port is formed between the front end portion of the battery holder and the wall portion of the inner edge portion of the foot board so as to open toward the rear side of the vehicle body. The drain port is provided with a cutout at an upper portion thereof.

A stepped portion is formed between the wall portion and the groove, the stepped portion having insertion holes and projection claws for an engagement with the frame cover.

According to the structure described above of the present invention, the battery holder is integrally formed between the left and right extending portions formed as a rear portion of the foot board, and the frame cover for covering the battery and the frame is attached to the inner edge portion. Therefore, a sufficiently large area for placement of driver's feet on the foot board can be maintained while the battery holder is covered with the frame cover.

The channels opened toward the rear of the vehicle is formed between the side portions of the battery holder and the inner edge portion. Therefore, even if rain water or the like is splashed by the rotation of the rear wheel on the battery holder and members around the battery holder, the rain water or the like flows out along the channels or grooves toward the rear of the vehicle without being accumulated.

Since the wall portion is formed along the inner edge portion and the lower end portion of the frame cover is inserted inside the wall portion, even if the rain water or the like is splashed on the inner surface of the frame cover by the rear wheel, the rain water or the like does not flow from the inside to the outside of the frame cover at the boundary between the foot board and the frame cover.

The further nature and features of the present invention will be made more clear from the following descriptions made in conjunction with the accompanying drawings.

### BRIEF DESCRIPTION OF THE DRAWINGS

In the accompanying drawings:
Fig. 1 is a side view showing the overall construction of a scooter type vehicle according to the present invention;
Fig. 2 is an exploded perspective view showing the structural parts about a leg rear of the scooter type vehicle of the embodiment of Fig. 1;
Fig. 3 is an enlarged exploded perspective view of the parts about the leg rear of the embodiment;
Fig. 4 is a side view of the leg rear of the embodiment;
Fig. 5 is a plan view showing essential parts of the embodiment;
Fig. 6 is a perspective view in which the portion VI of Fig. 3 is viewed in an enlarged state from the rear side of the vehicle;
Fig. 7 is a sectional view taken along the line VII-VII of Fig. 1; and
Fig. 8 is a sectional view taken along the line VIII-VIII of Fig. 3.

### DESCRIPTION OF THE PREFERRED EMBODIMENT

A preferred embodiment of a foot board for scooter type vehicle according to the present invention will be described hereunder with reference to the drawings.

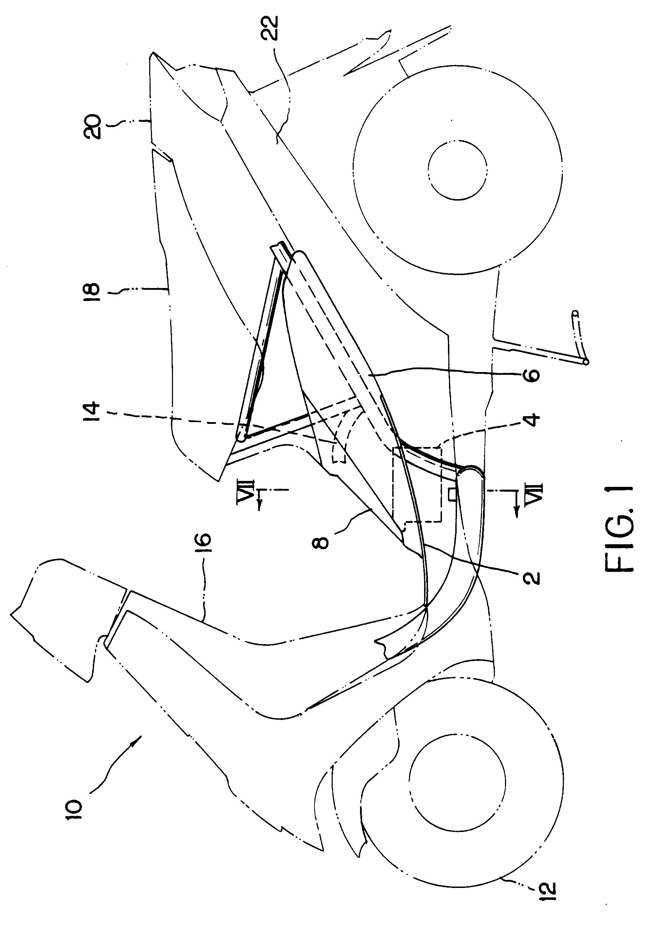

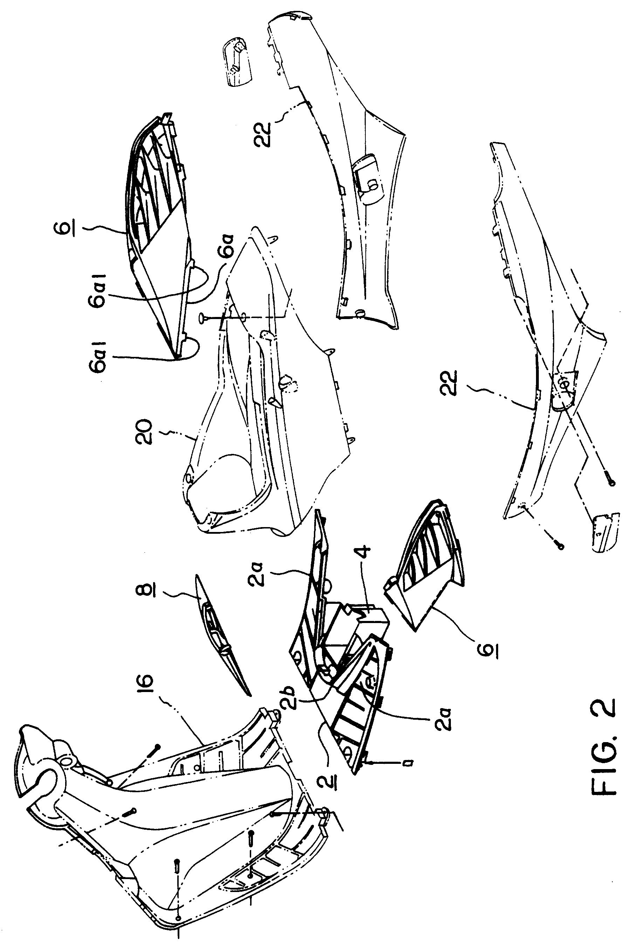

In this embodiment, the present invention is applied to a two-wheel scooter 10. As shown in Figs. 1 and 2, the scooter 10 is provided with a cover leg shield 16 positioned above a front wheel 12, and a leg rear (an example of the foot board) 2 on which driver's feet are placed is attached to a lower portion of the cover leg shield 16.

A left-right integrated type upper frame cover 20 is provided under a seat 18, and a lower frame cover 22 which covers a vehicle side portion from a vehicle rear end portion to a portion of the leg rear 2 close to the front end of the leg rear 2 is attached to a lower edge portion of a rear portion of the upper frame cover 20.

A rear portion of the leg rear 2 opens toward the rear of the vehicle in a generally V-shaped configuration as viewed in a plan view, and extends to positions on the left and right sides of the frame 14 under the seat 18. A battery holder 4 for accommodating a battery, not shown, is formed integrally with the leg rear 2 between left and right extending portions 2a. A wall portion 2b is formed on and along a generally V-shaped inner edge portion which is formed by the left and right extending portions of the leg rear 2.

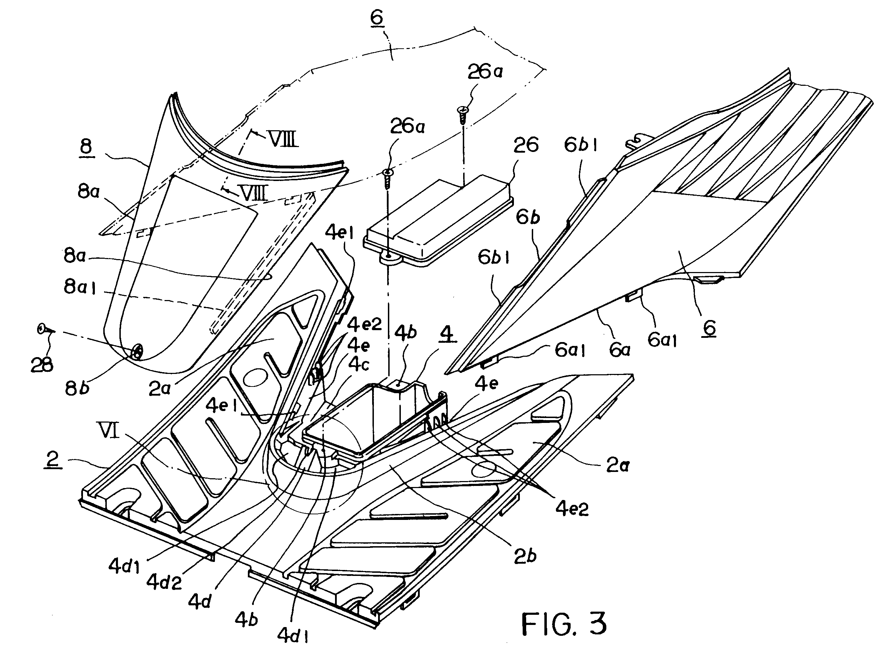

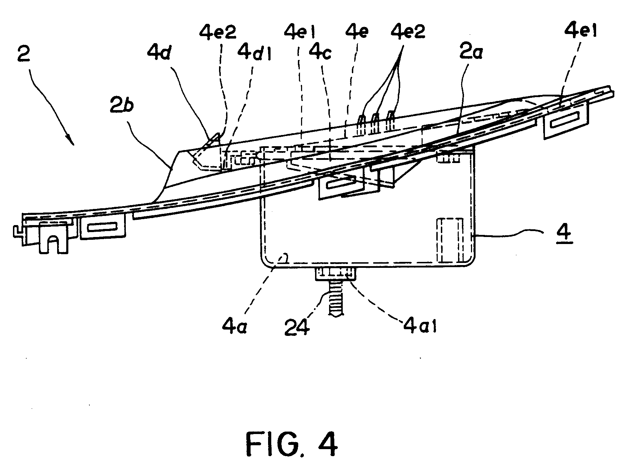

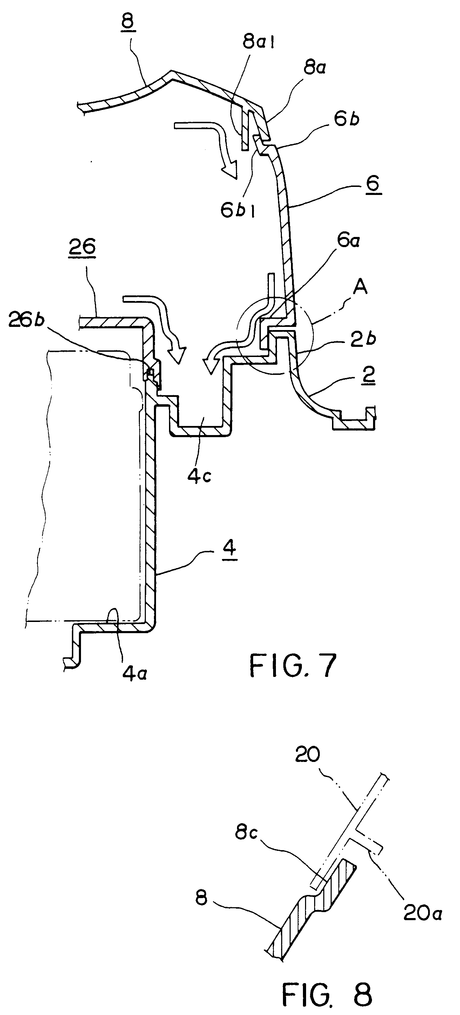

As shown in Figs. 3 to 5, the battery holder 4 has a space large enough to accommodate the battery, has a box-like shape open at its top, and is formed integrally with the leg rear 2 so that its upper end is positioned slightly below the upper end of the wall portion 2b, as viewed in the side view. A recess is formed in a bottom portion 4a of the battery holder 4 at a position corresponding to the frame, and a bolt insertion hole 4a1 in which a bolt 24 is inserted is formed at the bottom of this recess, as indicated by the imaginary line in Fig. 4. The battery holder 4 is fastened with this bolt 24 after being placed on the frame. Screw holes 4b are also respectively formed in front and rear end portions of the battery holder 4. After setting the battery in the battery holder 4, screws 26a are screwed into the screw holes 4b to fasten a battery cap 26 on the top of the battery holder 4 with a seal 26b (see Fig. 7) interposed therebetween.

Channel portions 4c are formed between the wall portion 2b and the left and right sides of battery holder 4 to connect the wall portion 2b open toward the rear of the vehicle and the battery holder 4. Each channel portion 4c has the shape of a right-angled triangle and has a bottom surface sloped in the direction toward the rear of the vehicle.

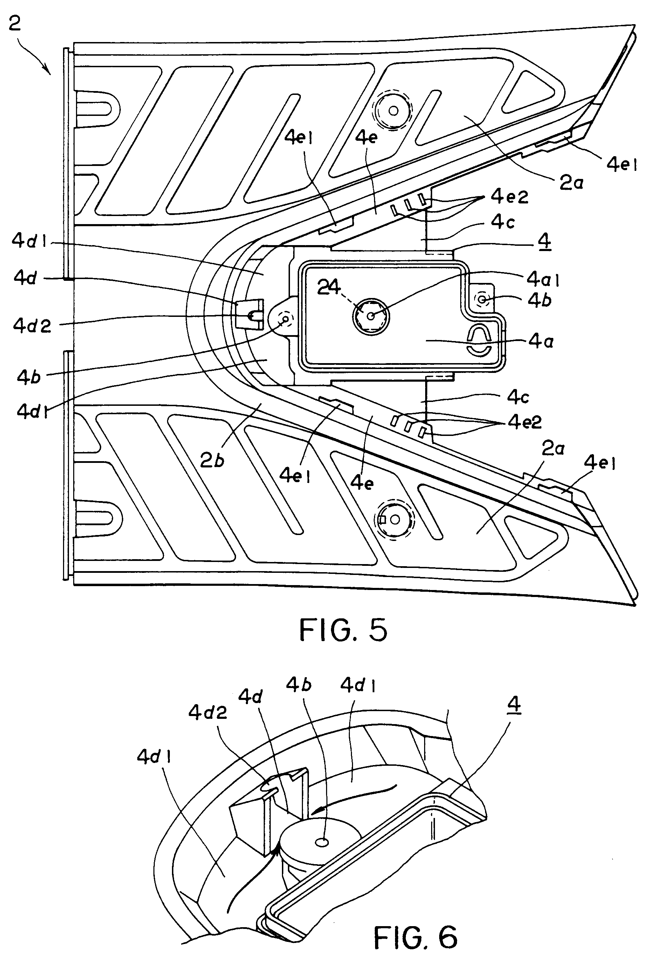

As shown in Fig. 6, a drain port 4d open upwardly and slightly toward the rear of the vehicle is provided between a front end portion of the battery holder 4 and the wall portion 2b. Flat surface portions 4d1 positioned on the left and right sides of the drain port 4d are sloped downward in the direction toward the drain port 4d. A cutout 4d2 is formed in an upper portion of the drain port 4d.

Further, as shown in Figs. 3 to 5, step portions 4e are formed between the wall portion 2b and the channel portions 4c. On each step portion 4e, insertion holes 4e1 and three claws 4e2 projecting upwardly are provided. The insertion holes 4e1 are provided on each step portion 4e by being respectively positioned at front and rear ends of the same, and three claws 4e2 are also provided on the step portion 4e. The claws 4e2 project upwardly and are positioned generally at a center of the step portion 4e.

In the leg rear 2 of this embodiment, a frame cover for covering the frame 14 and the battery holder 4 is attached to the inner edge portion, as shown in Figs. 1 to 3. This frame cover is mainly formed of cover side fronts 6 for covering on the left and right sides and a lid maintenance 8, i.e. frame cover, for covering on the front side.

A lower edge portion 6a of each cover side front 6 is shaped by being inwardly bent and then being bent vertically downward, as shown in A of Fig. 7, and has, as shown in Fig. 3, two claws 6a1 inserted into the two insertion holes 4e1 of the leg rear 2. When the cover side front 6 is attached to the leg rear 2, the two claws 6a1 are inserted into the two insertion holes 4e1 of the leg rear 2 and are slid forwardly so that the lower edge portion 6a is inserted inside the wall portion 2b of the leg rear 2. At this time, the three claws 4e2 of the leg rear 2 serve to prevent the cover side front from falling inwardly.

On an edge portion 6b of the cover side front 6, two inserted projecting portions 6b1 attached to the lid maintenance 8 are formed protrusively. On the other hand, ribs 8a1 are formed on an inner side surfaces of the lid maintenance 8 along left and right side edge portions 8a. When the cover side fronts 6 and the lid maintenance 8 are fitted to each other after an upper portion of the lid maintenance 8 has been inserted inside the upper frame cover 20, the two inserted projecting portions 6b1 of each cover side front 6 are inserted between the side edge portions 8a and the rib 8a1 of the lid maintenance 8, as shown in Fig. 7. Thereafter, as shown in Fig. 3, a screw 28 is inserted into a screw insertion hole 8b in a lower portion of the lid maintenance 8 and is fastened to the cutout 4d2 of the leg rear 2 with a nut member.

In the leg rear 2 of this embodiment having the above-described construction, the battery holder 4 is integrally provided between the extending portions 2a formed as rear portions of the leg rear 2 i.e. foot board, and the cover side fronts 6 and the lid maintenance 8, which cover the battery holder 4 and the frame 14, are attached to the wall portion 2b. Therefore, a sufficient area is maintained for placement of driver's feet on the leg rear 2, while the battery holder 4 is covered with the cover side fronts 6 and the lid maintenance 8 and other members.

Even if the rain water or the like is splashed on the battery holder 4 and the members around the battery holder 4 by the rotation of the rear wheel, the rain water is caused to flow through the sloped channel portions 4c toward the rear of the vehicle without being accumulated. Furthermore, on the front side of the battery holder 4, the rain water is collected to the drain port 4d by the slopes of the flat surface portions 4d1 to be discharged to the outside, as shown in Fig. 6.

As shown in Fig. 7, even if the rain water flows along the inner surface of the lid maintenance 8 and then along the inner surface of the cover side front 6, the rain water flows down into the channel portion 4c without flowing out to the extending portion 2a from the boundary between the lid maintenance 8 and the cover side front 6, since the rib 8a1 is located inside the cover side front 6.

Similarly, even if the rain water flows down from the inner surface of each cover side front 6 along the inner surface of the wall portion 2b of the leg rear 2, the rain water does not flow out to the extending portion 2a from the boundary between the wall portion 2b and the cover side front 6, since the lower edge portion 6a is located inside the wall portion 2b.

Furthermore, the joint between the upper portion of the lid maintenance 8 and the upper frame cover 20 may be such that, as shown in Fig. 8, the upper portion of the lid maintenance 8 is inserted inside the upper frame cover 20, and a projecting portion 20a is provided on the inner surface of the upper frame cover 20, thereby preventing the rain water from flowing out to the leg rear 2 from the boundary between the lid maintenance 8 and the upper frame cover 20.

Moreover, the rain water flowing on the upper surface of the battery cap 26 flows down into the channel portions 4c and the drain portion 4d while being prevented by the above-mentioned seal 26b from flowing into the battery holder 4.

In this embodiment, the structure of attachment of the leg rear 2 to the frame is such that the bottom 4a of the battery holder 4 is fixed on the frame. Therefore, the battery, which is a heavy object, can be stably mounted on the frame. Since the heavy object battery is positioned generally at the center in the front-rear direction of the vehicle, the stability of the vehicle can be improved.

This embodiment is a preferable embodiment of the scooter type vehicle foot board of the present invention, and the technical scope of the invention is not limited to this embodiment.

For example, while the prevent invention is applied to a two-wheel scooter in the embodiment, the present invention also be applied to three-wheel scooters.

As described hereinbefore, according to the present invention, it is possible to maintain a sufficient effective area for placement of driver's feet as well as to improve the external appearance of the vehicle. It is also possible to prevent accumulation of rain water or the like around the battery.

## Claims

1. A foot board structure of a scooter vehicle in which a cover leg shield is disposed above a front wheel, a foot board for a rider is attached to a lower portion of the cover leg shield, an upper frame cover is disposed below a rider's seat, and a lower frame cover covering a vehicle body side from a rear portion of the vehicle body to a portion near a front end of the foot board is disposed to a lower edge portion of the rear portion of the upper frame cover, the foot board (2) is provided with a rear end portion opening toward a rear side of the vehicle so as to provide a generally V-shaped configuration as viewed in a plan view and to extend to positions on the left and right sides of a vehicle frame under the seat, characterized in that a battery holder (4) in which a battery is accommodated is formed integrally with the foot board between the left and right extending portions (2a) thereof, and a frame cover (8) for covering said vehicle frame and said battery holder is mounted to a generally V-shaped inner edge portion formed by said left and right extending portions of the foot board.

2. A foot board structure according to claim 1, wherein a wall portion (2b) is formed along the V-shaped inner edge portion of the foot board and said frame cover (8) has a lower end portion inserted inside said wall portion (2b).

3. A foot board structure according to claim 2, wherein channel portions (4c) are formed between lateral side portions of the battery holder (4) and the wall portion (2b) of the inner edge portion of the foot board (2) so as to connect them and to open rearward of the vehicle body.

4. A foot board structure according to claim 3, wherein said channel portions (4c) each provides a right-angled triangular shape in a plan view and has a bottom surface inclining toward the rear side of the vehicle body.

5. A foot board structure according to claim 1, wherein the battery holder (4) is provided with a bottom portion which is fastened to the vehicle frame by means of screw.

6. A foot board structure according to claim 2, wherein a drain port (4d) is formed between the front end portion of the battery holder (4) and the wall portion (2b) of the inner edge portion of the foot board (2) so as to open toward the rear side of the vehicle body.

7. A foot board structure according to claim 6, wherein said drain port (4d) is provided with a cutout (4d2) at an upper portion thereof.

8. A foot board structure according to claim 6, wherein a stepped portion (4e) is formed between said wall portion (2b) and said channel portion (4c), said stepped portion (4e) having insertion holes (4e1) and projection claws (4e2) for an engagement with the frame cover (8).

## Patentansprüche

1. Fußbrettstruktur eines Rollerfahrzeugs, bei dem sich oberhalb eines Vorderrads ein Beinschutz befindet, ein Fußbrett für einen Fahrer an einem unteren Teil des Beinschutzes befestigt ist, eine obere Rahmenverkleidung sich unterhalb eines Fahrersitzes befindet, und eine untere Rahmenverkleidung, die eine Seite der Fahrzeugkarosserie von einem hinteren Teil der Fahrzeugkarosserie bis zu einem Bereich in der Nähe eines vorderen Endes des Fußbretts abdeckt, an einem unteren Randabschnitt des hinteren Teils der oberen Rahmenverkleidung angeordnet ist, wobei das Fußbrett (2) mit einem hinteren Endabschnitt ausgestattet ist, der sich zum hinteren Teil des Fahrzeugs in der Weise öffnet, daß er eine im wesentlichen V-förmige Gestalt im Grundriß aufweist, und sich zu Stellen auf der linken und der rechten Seite eines Fahrzeugrahmens unterhalb des Sitzes erstreckt, **dadurch gekennzeichnet**, daß ein Batteriehalter (4), in welchem eine Batterie aufgenommen ist, einstückig mit dem Fußbrett zwischen dessen linkem und rechtem Verlängerungsabschnitt (2a) ausgebildet ist, und eine Rahmenverkleidung (8) zum Abdecken des Fahrzeugrahmens und des Batteriehalters an einem im wesentlichen V-förmigen inneren Randabschnitt gelagert ist, der von dem linken und dem rechten Verlängerungsabschnitt des Fußbretts gebildet wird.

2. Fußbrettstruktur nach Anspruch 1, bei der ein Wandabschnitt (2b) entlang dem V-förmigen inneren Randabschnitt des Fußbretts gebildet ist, und die Rahmenverkleidung (8) einen unteren Endabschnitt aufweist, der in die Innenseite des Wandabschnitts (2b) eingesetzt ist.

3. Fußbrettstruktur nach Anspruch 2, bei der Kanalabschnitte (4c) zwischen seitlichen Abschnitten des Batteriehalters (4) und dem Wandabschnitt (2b) des inneren Randabschnitts des Fußbretts (2) ausgebildet sind, um die Teile zu verbinden, wobei sich die Kanalabschnitte zum hinteren Teil der Fahrzeugkarosserie hin öffnen.

4. Fußbrettstruktur nach Anspruch 3, bei der die Kanalabschnitte (4c) im Grundriß jeweils eine rechtwinklige Dreieckform und eine Bodenfläche, die zum hinteren Teil der Fahrzeugkarosserie geneigt ist, aufweisen.

5. Fußbrettstruktur nach Anspruch 1, bei der der Batteriehalter (4) mit einem Bodenteil ausgestattet ist, der an dem Fahrzeugrahmen durch Schrauben befestigt ist.

6. Fußbrettstruktur nach Anspruch 2, bei der eine Ablauföffnung (4d) zwischen dem vorderen Endabschnitt des Batteriehalters (4) und dem Wandabschnitt (2b) des inneren Randabschnitts des Fußbretts (2) ausgeformt ist, die sich zum hinteren Teil der Fahrzeugkarosserie öffnet.

7. Fußbrettstruktur nach Anspruch 6, bei der die Ablauföffnung (4d) in einem oberen Bereich von ihr mit einem Ausschnitt (4d2) versehen ist.

8. Fußbrettstruktur nach Anspruch 6, bei der ein abgestufter Abschnitt (4e) zwischen dem Wandabschnitt (2b) und dem Kanalabschnitt (4c) ausgebildet ist, wobei der abgestufte Abschnitt (4e) Einsetzlöcher (4e1) und Vorsprungsklauen (4e) zum Zusammenwirken mit der Rahmenverkleidung (8) aufweist.

## Revendications

1. Structure du plancher d'un véhicule de type scooter, dans lequel un tablier protecteur pour les jambes est disposé au-dessus d'une roue avant, un plancher destiné à un conducteur est fixé à une partie inférieure du tablier protecteur pour les jambes, un couvercle de châssis supérieur est disposé sous le siège conducteur et un couvercle de châssis inférieur couvrant le côté carrosserie du véhicule, depuis la partie arrière de la carrosserie du véhicule à la partie proche d'une extrémité avant du plancher, est disposé sur une partie de bordure inférieure de la partie arrière du couvercle de châssis supérieur, le plancher (2) étant pourvu d'une ouverture de partie d'extrémité arrière orientée vers le côté arrière du véhicule de manière à fournir une configuration globalement en forme de V quand on observe dans une vue en plan et de manière à s'étendre en des positions situées sur les côtés gauche et droit d'un châssis de véhicule, sous le siège, caractérisée en ce qu'un porte-batterie (4), dans lequel une batterie est logée, est formé d'une seule pièce avec le plancher entre les parties d'extension gauche et droite (2a) de celui-ci et un couvercle de châssis (8), destiné à couvrir ledit châssis de véhicule et ledit porte-batterie, étant monté sur une partie de bordure intérieure à forme globalement en V, formée par lesdites parties d'extension gauche et droite du plancher.

2. Structure de plancher selon la revendication 1, dans laquelle une partie de paroi (2b) est formée sur le bord de bordure intérieure en forme de V du plancher et ledit couvercle de châssis (8) a une partie d'extrémité inférieure insérée à l'intérieur de ladite partie de paroi (2b).

3. Structure de plancher selon la revendication 2, dans laquelle des parties formant canaux (4c) sont formées entre les parties de côté latérales du porte-batterie (4) et la partie de paroi (2b) de la partie de bord intérieure du plancher (2), de manière à les connecter et à déboucher vers l'arrière de la carrosserie du véhicule.

4. Une structure de plancher selon la revendication 3, dans laquelle lesdites parties formant canal (4c) ont chacune une forme triangulaire à angle droit, lorsque l'on observe en vue en plan, et comportent une surface inférieure s'inclinant en direction du côté arrière de la carrosserie de véhicule.

5. Une structure formant plancher selon la revendication 1, dans laquelle le porte-batterie (4) est pourvu d'une partie inférieure qui est fixée au châssis de véhicule au moyen d'une vis.

6. Une structure formant plancher selon la revendication 2, dans laquelle un orifice de drain (4d) est formé entre la partie d'extrémité avant du porte-batterie (4) et la partie formant paroi (2b) de la partie de bordure intérieure du plancher (2), de manière à déboucher vers le côté arrière de la carrosserie de véhicule.

7. Une structure de plancher selon la revendication 6, dans laquelle ledit orifice de drain (4d) est pourvu d'une découpure (4d2), ménagée en une partie supérieure de celui-ci.

8. Une structure de plancher selon la revendication 6, dans laquelle une partie étagée (4e) est formée entre ladite partie formant paroi (2b) et ladite partie formant canal (4c), ladite partie étagée (4e) ayant des trous d'insertion (4e1) et des griffes en saillie (4e2), pour permettre un engagement avec le couvercle de châssis (8).
